# EUROPEAN PATENT APPLICATION

(11) **EP 3 220 343 A1**
(43) Date of publication of application: **20.09.2017**
(21) Application number: 14906045.1
(22) Date of filing: 14.11.2014
(51) Int. Cl.: G06Q 50/14, G06Q 30/06, G06Q 30/02

(54) **AUTOMATIC PAGE EDITING METHOD, AUTOMATIC PAGE EDITING PROGRAM, AND AUTOMATIC PAGE EDITING DEVICE**

(71) Applicant: Fujitsu Limited, Kawasaki-shi, Kanagawa 211-8588 (JP)
(72) Inventor: MAITA, Tsuyoshi, Kanagawa 211-8588 (JP); NORO, Nobumi, Kanagawa 211-8588 (JP); SATO, Yoichi, Aomori-shi Aomori 030-0823 (JP)
(74) Representative: Hoffmann Eitle
(86) International application number: PCT/JP2014/080271
(87) International publication number: WO 2016/075832

(57) **Abstract**

An automatic page-editing apparatus collects information about a tourist spot from each of a plurality of sites and displays the information arranged in block units in one page. The automatic page-editing apparatus determines blocks each displayed as being contained in an area in the page displayed by the display unit when no block in the area is scrolled. Thereafter, the automatic page-editing apparatus calculates attention levels, each of which depends on a time duration when no block is scrolled, of the determined blocks. The automatic page-editing apparatus selects a block to be directly accommodated in the one page in accordance with the calculated attention levels.

## Description

### [Technical Field]

The present invention relates to automatic page-editing methods, automatic page-editing programs, and automatic page-editing apparatuses.

### [Background Art]

A user performing a search for information about, for instance, a tourism spot has conventionally browsed various websites that present the tourist spot by using the Internet or the like. A provider of a website measures a page view (hereinafter, sometimes referred to as "PV") of a web page in the website to determine browsing patterns and exploits the browsing patterns to improve the web page.

Tourism clouds and the like that collect information about a specific tourist spot provided by companies and the like with permission granted from the companies and the like and provide a website whose content is a compilation of the collected information are coming into use in recent years.

### [Citation List]

### [Patent Literature]

Patent Literature 1: Japanese Laid-open Patent Publication No. 2007-80296
Patent Literature 2: Japanese Laid-open Patent Publication No. 2013-93015
Patent Literature 3: Japanese Laid-open Patent Publication No. 2001-290832
Patent Literature 4: Japanese Laid-open Patent Publication No. 2007-52693
Patent Literature 5: Japanese Laid-open Patent Publication No. 2002-73677

### [Summary of invention]

### [Technical Problem]

Although the above-described technique allows determining whether a web page in a website is popular by counting a PV of the web page, the technique does not allow making detailed determination as to which content in the web page is popular. Hence, a situation where, even though a popular web page is displayed, less-popular content in the web page is displayed can occur, making it difficult to state that content satisfying a user's preferences is successfully provided.

An aspect of the present invention aims at providing an automatic page-editing method, an automatic page-editing program, and an automatic page-editing apparatus capable of providing a site satisfying a user's preferences.

### [Solution to Problem]

According to an aspect of an embodiment, automatic page-editing method includes: collecting information about a tourist spot from each of a plurality of sites and displaying the information arranged in block units in one page; determining blocks each displayed as being contained in an area when no block in the area is scrolled; calculating attention levels, each depending on a time duration when no block is scrolled, of the determined blocks; and selecting a block to be directly accommodated in the one page in accordance with the calculated attention levels.

### [Advantageous Effects of Invention]

According to an embodiment, it is possible to provide a site satisfying a user's preferences.

### [Brief Description of Drawings]

FIG. 1 is a diagram illustrating an example of an overall configuration of a system according to first embodiment.
FIG. 2 is a functional block diagram illustrating a functional configuration of an automatic page-editing apparatus according to first embodiment.
FIG. 3 is a diagram illustrating an example of information stored in a block information DB.
FIG. 4 is a diagram illustrating an example of a spot information page.
FIG. 5 is a diagram illustrating an example of a spot special page.
FIG. 6 is a flowchart illustrating a procedure for tourist-spot collection.
FIG. 7 is a flowchart illustrating a series of procedures from tourist-spot summarization to special-page display.
FIG. 8 is a diagram illustrating an example hardware structure.

### [Description of Embodiments]

Embodiment of automatic page-editing methods, automatic page-editing programs, and automatic page-editing apparatuses according to the present invention are described in detail below with reference to the drawings. These Embodiments are not intended to limit the invention. Embodiments may be combined as appropriate insofar as no contradiction arises.

### First Embodiment

### Overall Configuration

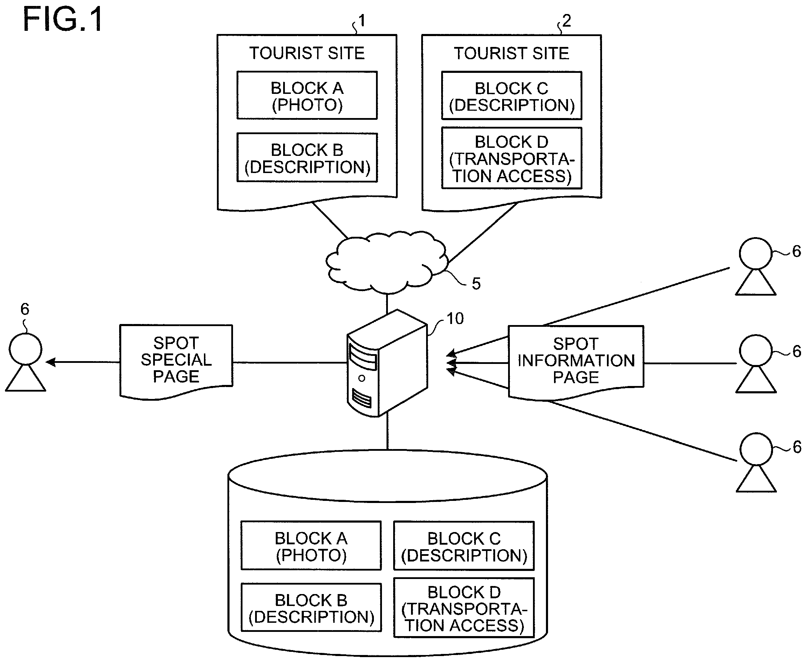

FIG. 1 is a diagram illustrating an example of an overall configuration of a system according to first embodiment. As illustrated in FIG. 1, this system includes an automatic page-editing apparatus 10 that is connected to other devices via a network, such as Internet 5. This Embodiment is described by way of example of a website of a tourist spot. Examples of the tourist spot include ruins, festivals, and world heritage sites.

The automatic page-editing apparatus 10 collects information about a tourist spot from each of a plurality of sites and displays the information arranged in block units in one page. Subsequently, the automatic page-editing apparatus 10 determines blocks each displayed as being contained in an area when no block in the area is scrolled and calculates attention levels, each of which depends on a time duration when no block is scrolled, of the determined blocks. Thereafter, the automatic page-editing apparatus 10 selects a block to be directly accommodated in the one page in accordance with the calculated attention levels.

For instance, the automatic page-editing apparatus 10 makes rounds of visiting a tourist site 1 and a tourist site 2, which are websites each provided by another company, association, or the like, to collect a block(s) from each of the tourist sites. Specifically, the automatic page-editing apparatus 10 performs what is commonly referred to as crawling, thereby collecting section information, which is a compilation of information about a tourist spot AAA in the tourist site.

In this example, the automatic page-editing apparatus 10 collects a block A containing a photo of the tourist spot AAA and a block B containing description about the tourist spot AAA from the tourist site 1. The automatic page-editing apparatus 10 collects a block C containing description about the tourist spot AAA and a block D containing transportation access to the tourist spot AAA from the tourist site 2.

The automatic page-editing apparatus 10 creates a spot information page, which is a web page where the block A, the block B, the block C, and the block D created and provided by the different companies or the like are displayed, as a website presenting the tourist spot AAA. Thereafter, the automatic page-editing apparatus 10 provides the newly-created spot information page to a user terminal 6 that accesses the automatic page-editing apparatus 10 to perform a search for the tourist spot AAA.

The automatic page-editing apparatus 10 collects view durations of the individual blocks in the spot information page and determines a popular block(s) and a less-popular block(s). The automatic page-editing apparatus 10 determines the popular block(s), which is determined based on the collected view durations, as a subject to be displayed and determines the less-popular block(s) as a subject not to be displayed.

Furthermore, upon receiving a request to display a special page featuring the tourist spot AAA from the user terminal 6, the automatic page-editing apparatus 10 responds to the user terminal 6 with a spot special page where the popular block(s) determined as the subject to be displayed is displayed. Thereafter, upon receiving a request to display a related page from the user terminal 6 on the spot special page, the automatic page-editing apparatus 10 responds to the user terminal 6 with a related page where the less-popular block(s) determined as the subject not to be displayed is displayed.

The automatic page-editing apparatus 10 can thus display the popular block(s) with a higher priority and display the less-popular block(s) in another screen and, accordingly, can provide user-satisfying web browsing.

### Functional Configuration

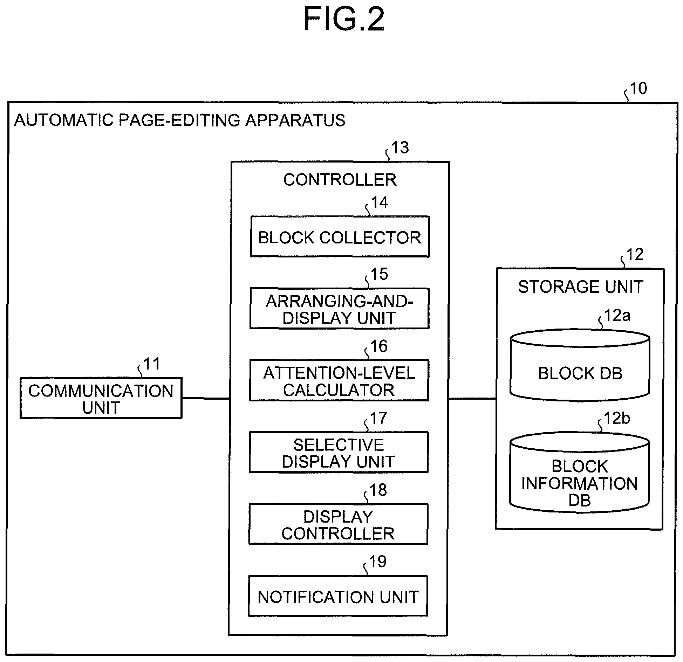

FIG. 2 is a functional block diagram illustrating a functional configuration of the automatic page-editing apparatus according to first embodiment. As illustrated in FIG. 2, the automatic page-editing apparatus 10 includes a communication unit 11, a storage unit 12, and a controller 13.

The communication unit 11, which is a network interface card for instance, is a processing unit that controls communications of other devices. For instance, the communication unit 11 transmits and receives data to and from a server providing another website and performs communication with a user terminal via a web browser.

The storage unit 12, which is a memory or a hard disk for instance, is a storage device that stores a block DB 12a, a block information DB 12b, and a program to be executed by the controller 13.

The block DB 12a is a database that stores blocks collected from other websites. The block DB 12a stores blocks presenting XX ruins, for instance. The stored blocks are information per se displayed on the websites. Examples of the information include text data and data including an image.

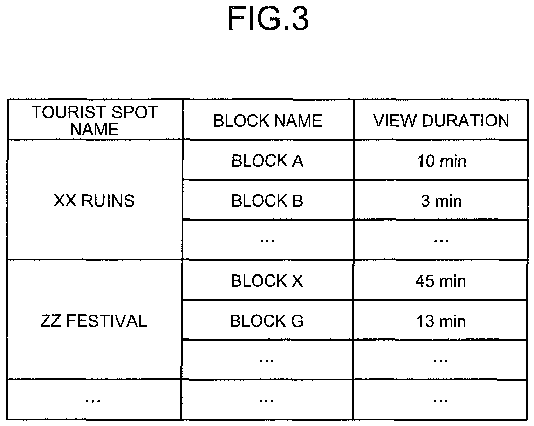

The block information DB 12b is a database that stores view durations of the collected blocks on a per-tourist-spot basis. FIG. 3 is a diagram illustrating an example of information stored in the block information DB. As illustrated in FIG. 3, the block information DB 12b stores "sightseeing spot name, block name, and view duration" associated with each other.

"Sightseeing spot name" is information, by which a target tourist spot is identified. "Block name" is information, by which a block acquired from a website presenting the tourist spot identified by the tourist spot name is identified. "View duration", which is a total period during which the block is viewed, is view duration collected in the spot information page described below.

The example of FIG. 3 indicates that the block A and the block B about XX ruins are collected, that the total view duration of the block A is 10 minutes, and that the total view duration of the block B is 3 minutes. Hence, it is indicated that the block A is a block more popularly viewed by users than the block B in the web page presenting XX ruins.

Note that the information given above is only an example and can be changed as desired. For instance, tourist spots may be grouped on a prefecture-by-prefecture basis.

The controller 13, which is a processor for instance, is a processing unit that performs overall control of the automatic page-editing apparatus 10. The controller 13 includes a block collector 14, an arranging-and-display unit 15, an attention-level calculator 16, a selective display unit 17, a display controller 18, and a notification unit 19. The block collector 14, the arranging-and-display unit 15, the attention-level calculator 16, the selective display unit 17, the display controller 18, and the notification unit 19 are an example of processes executed by a part of an electric circuit or the processor.

The block collector 14 is a processing unit that collects, from websites presenting a certain tourist spot, blocks contained in the websites. Specifically, the block collector 14 collects blocks, such as session information and contents presenting the tourist spot AAA for instance, from a plurality of web pages on the Internet and stores the blocks in the block DB 12a.

The block collector 14 accesses a web page described in a markup language, such as hypertext markup language (HTML), and collects information divided by DIV tags, table tags, or the like in the accessed web page as a block, for instance.

The arranging-and-display unit 15 is a processing unit that creates a web page where the collected blocks are arranged as contents and causes the user terminal 6 to display the web page. Specifically, upon receiving a search request to search for tourist spots in YY prefecture from the user terminal 6, the arranging-and-display unit 15 determines tourist spots associated with YY prefecture and blocks associated with the tourist spots using the block information DB 12b. The arranging-and-display unit 15 reads out contents of the determined blocks from the block DB 12a, creates a spot information page where the blocks are arranged on a spot-by-spot basis of the tourist spots associated with YY prefecture, and responds to the user terminal 6 with the spot information page.

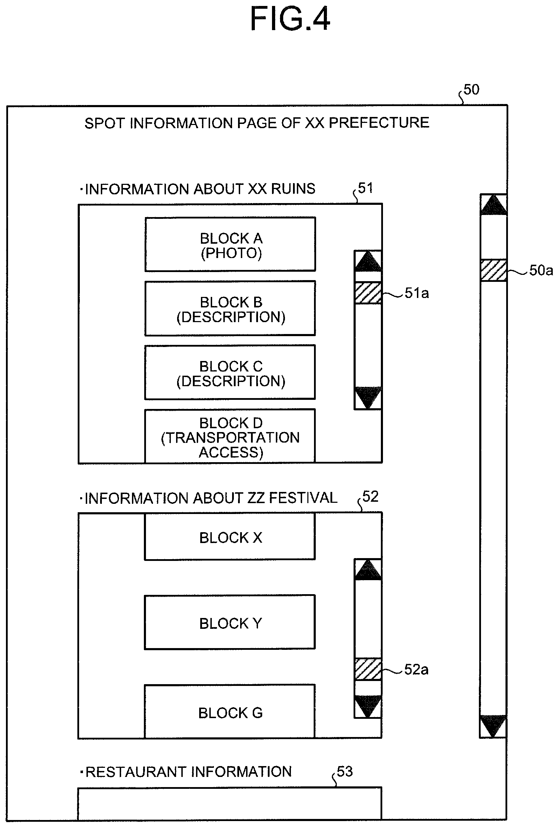

A concrete example is described below with reference to FIG. 4. FIG. 4 is a diagram illustrating an example of the spot information page. The arranging-and-display unit 15 creates the web page illustrated in FIG. 4 and transmits the web page to the user terminal 6. As illustrated in FIG. 4, the arranging-and-display unit 15 creates a spot information page 50 containing an area 51, an area 52, and an area 53 as a web page presenting tourist spots in YY prefecture.

The arranging-and-display unit 15 arranges a plurality of blocks of information about XX ruins in the area 51, a plurality of blocks of information about ZZ festival in the area 52, and a plurality of blocks of information about restaurants in the area 53. By way of example, the area 51 is described below. The area 51 contains, as the blocks of the information about XX ruins, the block A displaying a photo of XX ruins, the block B displaying description of XX ruins, the block C displaying description of XX ruins, and the block D displaying transport access to XX ruins. The number of the blocks may be one. The number, form, and the like of the areas are only an example and can be changed as desired.

The arranging-and-display unit 15 generates, for instance, a scroll button 50a, with which the entire page can be scrolled, and scroll buttons 51a and 52a, with which blocks can be scrolled area by area.

The attention-level calculator 16 is a processing unit that measures view durations of the individual blocks in the spot information page created and caused to be displayed by the arranging-and-display unit 15. Specifically, the attention-level calculator 16 measures stop duration of each of the blocks or, put another way, hold duration in which the block is not scrolled, on a per-spot basis of the tourist spots in the spot information page and stores the stop durations in the block information DB 12b. For instance, the attention-level calculator 16 determines blocks each displayed as being contained in an area when no block in the area is scrolled using a scroll position on a screen and calculates attention levels, each of which depends on a time duration when no block is scrolled, of the determined blocks. In short, the attention-level calculator 16 collects information about which block and how long the block is stopped to view the block based on a scroll status of the screen.

For instance, the user terminal 6 viewing the spot information page acquires information about, for instance, a screen display size, whether or not a scroll action is performed, and a block(s) being displayed every two seconds. The attention-level calculator 16 acquires the information collected by the user terminal 6 viewing the spot information page from the user terminal 6 every five seconds. The intervals given above are only an example and settings of the intervals may be changed as desired depending on, for instance, script of a browser that executes these.

The selective display unit 17 is a processing unit that determines a popular block(s) and a less-popular block(s) using the collected view durations and creates a spot special page where the popular block(s) is displayed with a higher priority. Specifically, the selective display unit 17 determines a block(s) having a view duration longer than or equal to a predetermined period as a popular block(s) and determines the other block(s) as a less-popular block(s). The selective display unit 17 selects the determined popular block(s) as a block(s) to be directly accommodated in one page, thereby creating the spot special page.

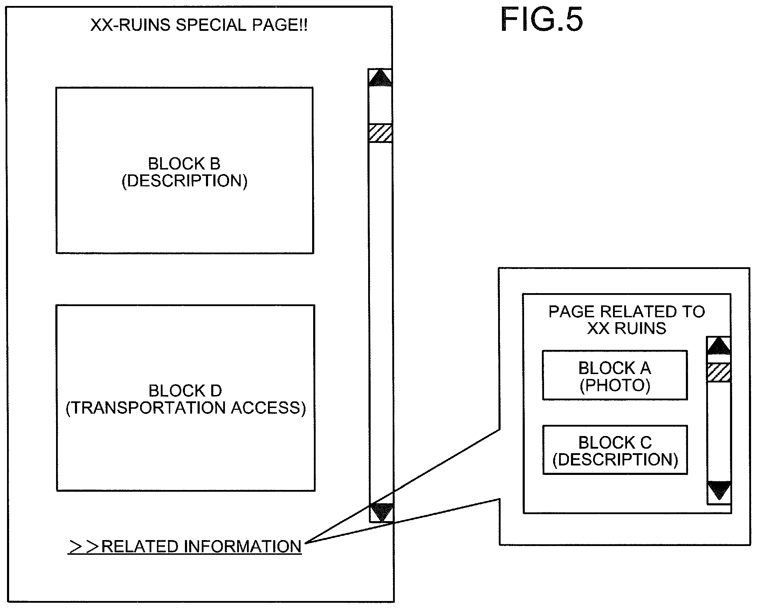

Specific description with reference to FIG. 5 is given below. FIG. 5 is a diagram illustrating an example of the spot special page. The selective display unit 17 creates the web page illustrated in FIG. 5 and transmits the web page to the user terminal 6. For instance, the selective display unit 17 creates the special page illustrated in FIG. 5 of a tourist spot selected from the spot information page illustrated in FIG. 4. Upon receiving a request to search for a special page of a certain tourist spot from the user terminal 6, the selective display unit 17 creates the special page illustrated in FIG. 5 of the tourist spot involved in the search request.

This is described by way of example below. When XX ruins are selected on the spot information page illustrated in FIG. 4, the arranging-and-display unit 15 displays the special page of XX ruins illustrated in FIG. 5. As illustrated in FIG. 5, when XX ruins are selected, the arranging-and-display unit 15 retrieves view durations of blocks associated with XX ruins from the block information DB 12b, selects the block B and the block D view durations of which are longer than or equal to the predetermined period as a subject to be displayed, and selects the other blocks, i.e., the block A and the block C, as a subject not to be displayed.

Thereafter, the arranging-and-display unit 15 creates a spot special page where the block B and the block D are arranged and a related page where the block A and the block C are arranged and creates a link on the spot special page to the related page. Specifically, as illustrated in FIG. 5, the arranging-and-display unit 15 transmits the spot special page where the block B and the block D are arranged and ">>related information", which is the link to the related page, is put to the user terminal 6. The arranging-and-display unit 15 arranges the blocks such that the longer the view duration of a block is, the closer to the top of the page the block is located.

The display controller 18 is a processing unit that changes a currently-displayed page from the spot special page to the related page. Specifically, when the link to the related page is selected from the user terminal viewing the spot special page, the display controller 18 transmits the related page to the user terminal 6.

For instance, when the link ">>related information" on the spot special page of XX ruins illustrated in FIG. 5 is selected, the display controller 18 transmits the XX-ruins-related page where the block A and the block C, which are the subject not to be displayed, are arranged to the user terminal 6.

The notification unit 19 is a processing unit that feeds back popularity of each block to a creator of the block. Specifically, the notification unit 19 transmits, to a stored address associated with either a block whose attention level is high or a site containing the block to be directly accommodated in the one page, information by which the target block is identified and an attention level of the target block. For instance, the notification unit 19 holds a block associated with an address of a source from which the block is collected in the storage unit 12 or the like and sends information, such as a view duration of the collected block, to the source from which the block is collected. In short, the notification unit 19 notifies the entity managing the popular block that the block managed by the entity is popular.

Similarly, the notification unit 19 transmits, to a stored address associated with either a block whose attention level is low or a site containing the remainder, after selection of the block to be directly accommodated in the one page, of the blocks, information by which the target block is identified and an attention level of the target block. In short, the notification unit 19 notifies an entity managing the less-popular block that the block managed by the entity is less popular. The above-described operations can encourage the managing entities to put more energy in creating contents.

### Processing Procedures

Tourist-spot collection and special-page display are described below.

### Procedure for collection

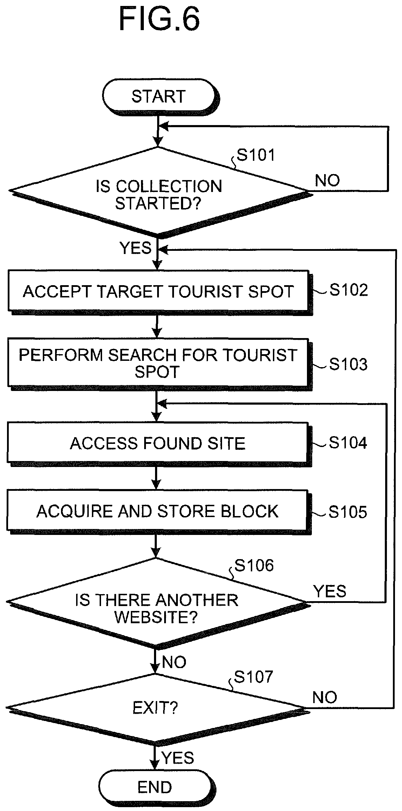

FIG. 6 is a flowchart illustrating a procedure for tourist-spot collection. As illustrated in FIG. 6, when an instruction to start collection is issued (Yes at S101), the block collector 14 accepts a tourist spot as a collection target (S102).

Subsequently, the block collector 14 performs a search for a website presenting the tourist spot through websites accessible on the Internet (S103) and accesses the found website (S104).

Thereafter, the block collector 14 accesses a web page(s) presenting the tourist spot in the found website, collects a block(s) presenting the tourist spot, and stores the block(s) in the block DB 12a (S105).

When there is another website presenting the tourist spot (Yes at S106), the block collector 14 returns to S104 and repeats S104 and steps that follow S104. When there is no other website presenting the tourist spot (No at S106) and the procedure is to be completed (Yes at S107), the block collector 14 ends the procedure. When another tourist spot is to be processed (No at S107), the block collector 14 returns to S102 and repeats S102 and steps that follow S102.

### Procedure for special-page display

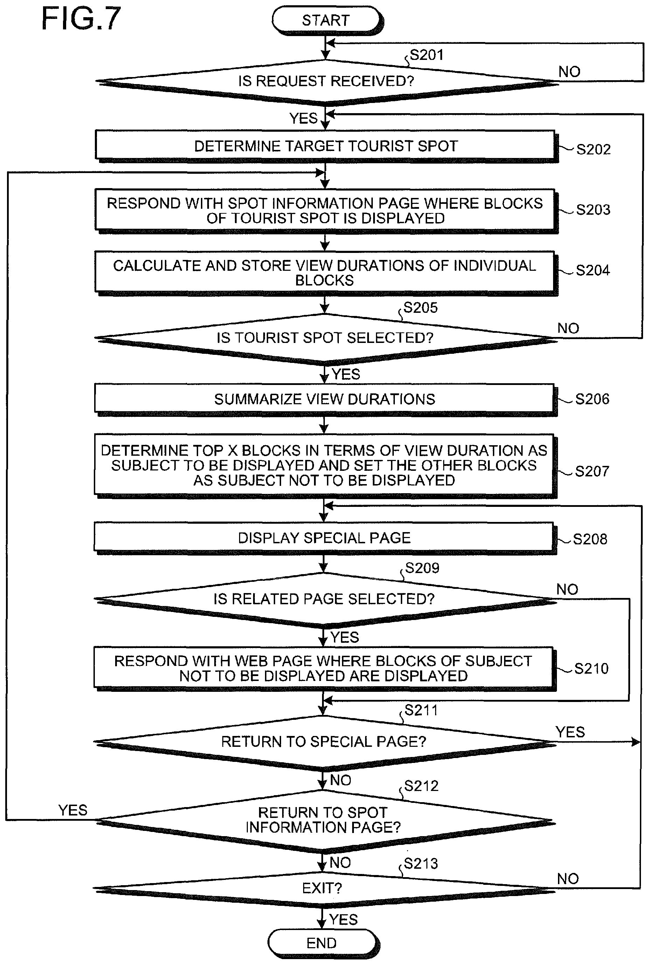

FIG. 7 is a flowchart illustrating a series of procedures from tourist-spot summarization to special-page display. Although the description below is made by way of example of the series of procedures, the tourist-spot summarization and the special-page display may be performed in separate procedures.

As illustrated in FIG. 7, upon receiving a request for a page representing a tourist spot or the like from the user terminal 6 (Yes at S201), the arranging-and-display unit 15 determines the requested, target tourist spot (S202).

Subsequently, the arranging-and-display unit 15 creates a spot information page where collected blocks of the tourist spot are displayed and responds to the user terminal 6 with the spot information page (S203). Thereafter, the attention-level calculator 16 calculates view durations of the individual blocks in the spot information page and stores the view durations in the block information DB 12b (S204).

When a tourist spot is selected on the spot information page (Yes at S205), the attention-level calculator 16 summarizes the view durations (S206). When no tourist spot is selected on the spot information page (No at S205), S202 and steps that follow S202 are repeated.

Thereafter, the selective display unit 17 determines top X blocks in terms of view duration, where X may be any number, as a subject to be displayed and sets the other blocks as a subject not to be displayed (S207). The selective display unit 17 responds to the user terminal 6 with a spot special page where the blocks of the subject to be displayed are displayed in one page (S208).

Thereafter, when the related page is selected on the spot special page (Yes at S209), the display controller 18 responds to the user terminal 6 with the related page where the blocks of the subject not to be displayed are displayed (S210). When the related page related to the spot is not selected on the spot special page (No at S209), S211 is performed.

Upon accepting an operation of returning to the spot special page on the related page (Yes at S211), the selective display unit 17 returns to S208 to perform 208 and steps that follow S208. When an operation of returning to the spot information page, rather than the operation of returning to the spot special page (No at S211), is accepted on the related page (Yes at S212), S203 and steps that follow S203 are repeated.

When an exit operation, rather than the operation of returning to the spot information page (No at S212), is accepted (Yes at S213), the automatic page-editing apparatus 10 ends the procedure. When the exit operation is not accepted either (No at S213), the procedure returns to S208 to perform S208 and steps that follow S208.

As described above, the automatic page-editing apparatus 10 can transmit a web page whose top page is made up with popular information about a tourist spot to the user terminal 6. This allows a user to view the popular information about the tourist spot with less effort. Hence, the automatic page-editing apparatus 10 can provide a site satisfying the user's preferences.

The automatic page-editing apparatus 10 can associate less-popular information about the tourist spot with a web page displaying the popular information about the tourist spot and, accordingly, provide also information that is viewed less frequently without omission.

The automatic page-editing apparatus 10 can feed back popularity of each block of the tourist spot to the source, from which the block is collected, thereby encouraging the source to enrich and update information about the tourist spot. This leads to providing users with information about the tourist spot that is kept up to date.

### Second Embodiment

Although embodiments of the present invention has been described above, the present invention may be implemented in various other forms other than the above-described embodiments.

### Sightseeing spot

Although the above-described embodiment has been described by way of example of blocks of a tourist spot, application is not limited thereto. Application to contents of various types, such as a concert, an exhibition, earthquake disaster information, disaster prevention information, and earthquake information, on which web pages are presumably provided by a plurality of companies and the like can be made. Such application enables a user to easily view helpful information pieces among, for instance, earthquake disaster information pieces.

### Subject not to be displayed

Although the above-described embodiment has been described by way of example in which less-popular tourist spots are displayed on the related page as the subject not to be displayed, if one of the less-popular tourist spots gains popularity afterward, the one tourist spot may be upgraded to the subject to be displayed. For instance, the automatic page-editing apparatus 10 can measure rates of rise of view durations of the individual blocks displayed on the related page in a predetermined period and upgrade a block whose rate of rise exceeds a threshold value to the subject to be displayed. Similarly, the automatic page-editing apparatus 10 can measure rates of rise of view durations of individual blocks displayed on the special page in a predetermined period and downgrade a block whose rate of rise is lower than or equal to a predetermined value to the subject not to be displayed. By performing such operations, the automatic page-editing apparatus 10 can display blocks satisfying a user's preferences with a higher priority without being affected by short-lived popularity.

### View duration

Although the above-described embodiment has been described by way of example in which scroll-stop duration is utilized as the view duration, the view duration is not limited thereto. Any one of functions provided by an Internet browser and various functions usable through installation on the Internet browser can be utilized. For instance, the position of a browser or displayed position of a web page on a terminal can be determined by using Java (registered trademark) script or the like. Furthermore, usable value is not limited to the view duration; for instance, the number of viewings or the PV can be used. Examples of the user terminal 6 include a personal computer, a cellular phone, and other terminals of various types.

### System

Each of the elements in the illustrated apparatus is not always physically structured as illustrated. Specifically, the elements may be separated or integrated in any units. Furthermore, all or any part of processing functions performed in each apparatus can be implemented by a CPU and a program parsed and executed by the CPU or, alternatively, implemented in hardware with hard-wired logic.

All or a part of processing described in this embodiment as processing to be performed automatically can be performed manually. All or a part of processing described as processing to be performed manually can be performed automatically using a known method(s). Information including processing procedures, control procedures, specific names, and a variety of data and parameters described in this document or illustrated in the drawings may be changed as desired unless otherwise specified.

### Hardware

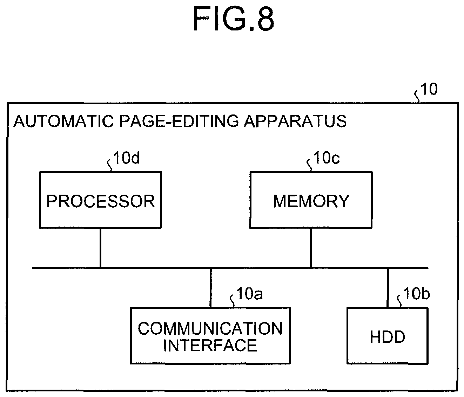

FIG. 8 is a diagram illustrating an example hardware structure. As illustrated in FIG. 8, the automatic page-editing apparatus 10 includes a communication interface 10a, a hard disk drive (HDD) 10b, a memory 10c, and a processor 10d. The elements illustrated in FIG. 8 are mutually connected via a bus or the like.

The communication interface 10a, which is a network interface card for instance, is an interface that controls communications with other devices. The HDD 10b stores the program that implements functions illustrated in FIG. 2 and the like, a DB, a table, and the like.

The processor 10d causes processes that perform the functions described with reference to FIG. 2 and the like by reading out the program that executes processing similar to that executed by the processing units illustrated in FIG. 2 and the like from the HDD 10b or the like and loading the program into the memory 10c.

Put another way, the processes perform functions similar to those of the processing units included in the automatic page-editing apparatus 10. Specifically, the processor 10d reads out the program including functions similar to those of the block collector 14, the arranging-and-display unit 15, the attention-level calculator 16, the selective display unit 17, the display controller 18, and the notification unit 19 from the HDD 10b or the like. The processor 10d executes the processes that perform processing similar to that performed by the block collector 14, the arranging-and-display unit 15, the attention-level calculator 16, the selective display unit 17, the display controller 18, and the notification unit 19.

The automatic page-editing apparatus 10 reads out and executes the program in this manner, thereby operating as an information processing apparatus that performs an automatic page-editing method. The automatic page-editing apparatus 10 can implement functions similar to those of the above-described embodiments by reading out, using a medium reading device, the program from a recording medium and executing the read-out program. The program of this other embodiment is not always executed by the automatic page-editing apparatus 10. For instance, the present invention is applicable as well to a configuration where the program is executed by another computer or a server or a configuration where the program is executed through cooperation therebetween.

### [Reference Signs List]

- 10: automatic page-editing apparatus
- 11: communication unit
- 12: storage unit
- 12a: block DB
- 12b: block information DB
- 13: controller
- 14: block collector
- 15: arranging-and-display unit
- 16: attention-level calculator
- 17: selective display unit
- 18: display controller
- 19: notification unit

## Claims

1. An automatic page-editing method comprising:
collecting information about a tourist spot from each of a plurality of sites and displaying the information arranged in block units in one page;
determining blocks each displayed as being contained in an area when no block in the area is scrolled;
calculating attention levels, each depending on a time duration when no block is scrolled, of the determined blocks; and
selecting a block to be directly accommodated in the one page in accordance with the calculated attention levels.

2. The automatic page-editing method according to claim 1, further comprising performing control of displaying the remainder, after selection the block to be directly accommodated in the one page, of the blocks in response to a clicking action.

3. The automatic page-editing method according to claim 1, further comprising transmitting, to a stored address associated with a site containing the block to be directly accommodated in the one page or the block whose attention level is high, identification information of a target block and an attention level of the target block.

4. The automatic page-editing method according to claim 1, further comprising transmitting, to a stored address associated with a site containing the block which is not subject to directly accommodate in the one page or a block whose attention level is low, identification information of a target block and an attention level of the target block.

5. An automatic page-editing program comprising:
collecting information about a tourist spot from each of a plurality of sites and displaying the information arranged in block units in one page;
determining blocks each displayed as being contained in an area when no block in the area is scrolled;
calculating attention levels, each depending on a time duration when no block is scrolled, of the determined blocks; and
selecting a block to be directly accommodated in the one page in accordance with the calculated attention levels.

6. An automatic page-editing apparatus comprising:
a display unit that collects information about a tourist spot from each of a plurality of sites and displaying the information arranged in block units in one page;
a determining unit that determines blocks each displayed as being contained in an area in the page displayed by the display unit when no block in the area is scrolled;
a calculating unit that calculates attention levels, each depending on a time duration when no block is scrolled, of the blocks determined by the determining unit; and
a selecting unit that selects a block to be directly accommodated in the one page in accordance with the attention levels calculated by the calculating unit.
